# EUROPEAN PATENT SPECIFICATION

(11) **EP 4 545 197 B1**
(45) Date of publication and mention of the grant of the patent: **25.11.2026**
(21) Application number: 23827110.0
(22) Date of filing: 15.06.2023
(51) Int. Cl.: B21D 5/02, B30B 15/26, G05B 19/00, B23Q 17/24, G06T 5/80, G06T 7/70

(54) **PRESS BRAKE, PRESS BRAKE CONTROL DEVICE, AND PRESS BRAKE CONTROL METHOD**
ABKANTPRESSE, ABKANTPRESSENSTEUERUNGSVORRICHTUNG UND ABKANTPRESSENSTEUERUNGSVERFAHREN
FREIN DE PRESSE, DISPOSITIF DE COMMANDE DE FREIN DE PRESSE ET PROCÉDÉ DE COMMANDE DE FREIN DE PRESSE

(30) Priority: 23.06.2022 JP 2022101221
(43) Date of publication of application: 30.04.2025
(73) Proprietor: Amada Co., Ltd., Isehara-shi, Kanagawa 259-1196 (JP)
(72) Inventor: NAKAGAWA, Daiki, Isehara-shi, Kanagawa 259-1196 (JP); KEMMOTSU, Hideki, Isehara-shi, Kanagawa 259-1196 (JP)
(74) Representative: Grünecker Patent- und Rechtsanwälte PartG mbB
(86) International application number: PCT/JP2023/022283
(87) International publication number: WO 2023/248924

(56) References cited:
- DE-A1- 102010 016 646
- JP-A- 2013 158 787
- JP-A- 2019 529 111
- JP-A- 2019 532 817
- JP-A- 2022 051 155
- JP-A- S6 313 622
- JP-B2- 3 908 097
- US-A1- 2019 176 201

## Description

### [TECHNICAL FIELD]

The present disclosure relates to a press brake, a press brake control device, and a press brake control method.

### [BACKGROUND ART]

Patent Literature 1 describes that a camera is arranged at least above on the far side of an upper table of a press brake and an image as a work guide showing the position or movement of an abutment of a back gauge is superimposed on an image captured by the camera.
Patent Literature DE 102010016646 A1, which forms the basis for the preambles of claims 1 and 6, relates to operating a manufacturing press, such as a press brake. The system retrieves pre-stored target data defining the configuration of tools and the workpiece. An image capturing device records the actual state of the work area. That actual state is compared with a target state. The operations to perform the forming of the workpiece is only initiated or continued if the actual and target states match. If a deviation is detected, the forming process is halted, and the discrepancy is displayed to the operator.
Patent Literature JP3908097B2 discloses a bending apparatus that improves workpiece positioning accuracy. An imaging means captures a real-time image of the contact state between a workpiece and the backgauge. A projection means then projects this captured image onto the surface of the machine's upper table. The system can overlay a simulation image of the correct position onto the real-time image.
Patent Literature US2019176201A1 describes a bending machine with an image capture system. The system uses two image capture means to capture two overlapping partial views of the work area. An image synthesis module combines these views into a single live image that is presented on a display. Patent Literature JP2019532817A describes a bending machine with an image detection system to overcome the operator's obstructed view of the rear machine chamber. An internal camera captures the work area, while a wireless system tracks the operator's position. An image processor uses this position data to correct the camera image's perspective in real-time. The resulting dynamic, perspective-corrected image is shown on a display.
Patent Literature JP2022051155A discloses a press brake system that enhances an operator's ability to view the working area. An image of the work area is captured. Distance data for objects within the image is generated. The distance data is used to identify objects of interest located within a predefined three-dimensional region of interest. A cropped image is generated containing only the identified objects, filtering out the machine's background. The cropped image is then outputted to a display screen.

### [Citation List]

### [Patent Literature]

[Patent Literature 1] International Publication No. WO2020/041807

### [SUMMARY OF INVENTION]

In the press brake described in Patent Literature 1, an operator cannot visually recognize at which position of the abutment the operator should cause the workpiece to abut against the abutment, in each bending process of the workpiece.

A first aspect of one or more embodiments provides a press brake according to independent claim 1.

According to the first aspect of one or more embodiments, it is possible to display a superimposed image obtained by superimposing a workpiece shape image and an abutting area image on an image captured by a camera, on a display device. Therefore, an operator can visually recognize at which position of an abutment the operator should cause the workpiece to abut against the abutment.

A second aspect of one or more embodiments provides a press brake control device not according to the invention including: a bending data extraction unit configured to extract, from a processing program for performing bending of a workpiece to be processed, shape information about the workpiece, position information about a position to place the workpiece in each of bending processes of the workpiece, abutment identification information identifying an abutment to be used in each of the bending processes, abutment coordinates in real space to position the abutment in each of the bending processes, and abutting area information indicating an area of the abutment to be abutted by the workpiece in each of the bending processes as bending data; an additional image generation unit configured to generate, based on the shape information about the workpiece, the position information about the workpiece, the abutment identification information, the abutment coordinates, and the abutting area information extracted by the bending data extraction unit, and coordinate conversion values for converting a position in real space in a direction of a lower table a camera captures an image of to a position on the image captured by the camera, the camera being placed on a backside of an upper table, and the coordinate conversion values being determined in advance and held in a holding unit, an additional image including a workpiece shape image showing a shape of the workpiece and an abutting area image showing the areas of the abutment to be abutted by the workpiece; and a superimposed image generation unit configured to generate a superimposed image obtained by superimposing the additional image on the captured image to generate a superimposed image to be displayed on a display device.

According to the second aspect of one or more embodiments, it is possible to perform control to display a superimposed image obtained by superimposing a workpiece shape image and an abutting area image on an image captured by a camera, on a display device. Therefore, the operator can visually recognize at which position of the abutment the operator should cause the workpiece to abut against the abutment.

A third aspect of one or more embodiments provides a press brake control method according to independent claim 6.

According to the third aspect of one or more embodiments, it is possible to perform control to display a superimposed image obtained by superimposing a workpiece shape image and an abutting area image on an image captured by a camera, on a display device. Therefore, the operator can visually recognize at which position of the abutment the operator should cause the workpiece to abut against the abutment.

According to the press brake, the press brake control device, and the press brake control method according to one or more embodiments, it is possible for the operator to perform bending of a workpiece while visually recognizing at which position of the abutment the operator should cause the workpiece to abut against the abutment in each bending process of the workpiece.

### [BRIEF DESCRIPTION OF DRAWINGS]

[FIG. 1] FIG. 1 is a diagram illustrating an overall configuration of a press brake according to one or more embodiments.
[FIG. 2] FIG. 2 is a block diagram illustrating the press brake according to one or more embodiments.
[FIG. 3] FIG. 3 is a plan view illustrating an example of a shape of a workpiece that is bent by the press brake according to one or more embodiments.
[FIG. 4A] FIG. 4A is a partial plan view illustrating a first example of the shape of an abutment of a back gauge included in the press brake according to one or more embodiments.
[FIG. 4B] FIG. 4B is a partial plan view illustrating a second example of the shape of an abutment of the back gauge included in the press brake according to one or more embodiments.
[FIG. 5A] FIG. 5A is a partial plan view illustrating an abutting area to be abutted by the workpiece when the abutment of the first example shown in FIG. 4A is used.
[FIG. 5B] FIG. 5B is a partial plan view illustrating an abutting area to be abutted by the workpiece when the abutment of the second example shown in FIG. 4B is used.
[FIG. 6] FIG. 6 is a diagram illustrating an example of parallel images generated and transmitted to a tablet device by an NC device of the press brake according to one or more embodiments.
[FIG. 7] FIG. 7 is a diagram illustrating an example of alternate images generated and transmitted to the tablet device by the NC device of the press brake according to one or more embodiments.
[FIG. 8] FIG. 8 is a flowchart illustrating a first example of processes executed by the press brake according to one or more embodiments.
[FIG. 9] FIG. 9 is a flowchart illustrating a second example of the processes executed by the press brake according to one or more embodiments.
[FIG. 10] FIG. 10 is a block diagram illustrating a preferred configuration of the press brake according to one or more embodiments.
[FIG. 11] FIG. 11 is a partial perspective view illustrating an example of sensors included in the abutment.
[FIG. 12A] FIG. 12A is a diagram illustrating an example of a way of generating an enlarged image in the case of causing the workpiece to make contact with one or two abutments.
[FIG. 12B] FIG. 12B is a diagram illustrating an example of a way of generating an enlarged image in the case of causing the workpiece to make contact with three abutments.

### [DESCRIPTION OF EMBODIMENTS]

A press brake according to one or more embodiments includes: an upper table to be fitted with a punch; a lower table to be fitted with a die; an NC device configured to control bending of a workpiece by the punch and the die based on a processing program; a back gauge arranged on a back side of the lower table and comprising one or more abutments defining a position in a depth direction at a time of placing the workpiece on the die; a camera arranged on a back side of the upper table and configured to capture an image in a direction of the lower table; and a display device configured to display the image captured by the camera.

The NC device includes an additional image generation unit and a superimposed image generation unit. The additional image generation unit generates, based on shape information about the workpiece, position information about a position to place the workpiece in each of bending processes of the workpiece, abutment identification information identifying abutments to be used in each of the bending processes, abutment coordinates in real space to position the abutments in each of the bending processes, and abutting area information indicating areas of the abutments to be abutted by the workpiece in each of the bending processes extracted from the processing program, and coordinate conversion values for converting a position in the real space the camera captures an image of to a position on the captured image, additional images to be added to the captured image, including a workpiece shape image showing a shape of the workpiece and abutting area images showing the areas of the abutments to be abutted by the workpiece.

The superimposed image generation unit generates a superimposed image to be displayed on the display device by superimposing the additional images on the captured image.

A press brake control device according to one or more embodiments includes a bending data extraction unit, an additional image generation unit, and a superimposed image generation unit. The bending data extraction unit extracts, from a processing program for performing bending of a workpiece to be processed, shape information about the workpiece, position information about a position to place the workpiece in each of bending processes of the workpiece, abutment identification information identifying abutments to be used in each of the bending processes, abutment coordinates in real space to position the abutments in each of the bending processes, and abutting area information indicating areas of the abutments to be abutted by the workpiece in each of the bending processes as bending data.

The additional image generation unit generates, based on the shape information about the workpiece, the position information about the workpiece, the abutment identification information, the abutment coordinates, and the abutting area information extracted by the bending data extraction unit, and coordinate conversion values for converting a position in real space in a direction of a lower table a camera captures an image of to a position on the image captured by the camera, the camera being placed on a backside of an upper table, and the coordinate conversion values being determined in advance and held in a holding unit, additional images including a workpiece shape image showing a shape of the workpiece and abutting area images showing the areas of the abutments to be abutted by the workpiece.

The superimposed image generation unit generate a superimposed image obtained by superimposing the additional images on the captured image to generate a superimposed image to be displayed on a display device.

In a press brake control method according to one or more embodiments, an NC device configured to control bending of the workpiece extracts, from a processing program for performing bending of a workpiece to be processed, shape information about the workpiece, position information about a position to place the workpiece in each of bending processes of the workpiece, abutment identification information identifying abutments to be used in each of the bending processes, abutment coordinates in real space to position the abutments in each of the bending processes, and abutting area information indicating areas of the abutments to be abutted by the workpiece in each of the bending processes.

The NC device generates, based on the shape information about the workpiece, the position information about the workpiece, the abutment identification information, the abutment coordinates, and the abutting area information, and coordinate conversion values for converting a position in real space in a direction of a lower table a camera captures an image of to a position on the image captured by the camera, the camera being placed on a backside of an upper table, and the coordinate conversion values being determined in advance and held in a holding unit, additional images including a workpiece shape image showing a shape of the workpiece and a abutting area image showing the areas of the abutments to be abutted by the workpiece.

The NC device generates a superimposed image obtained by superimposing the additional images on the captured image to generate a superimposed image to be displayed on a display device.

The press brake, the press brake control device, and the press brake control method according to one or more embodiments will be described below in detail with reference to accompanying drawings.

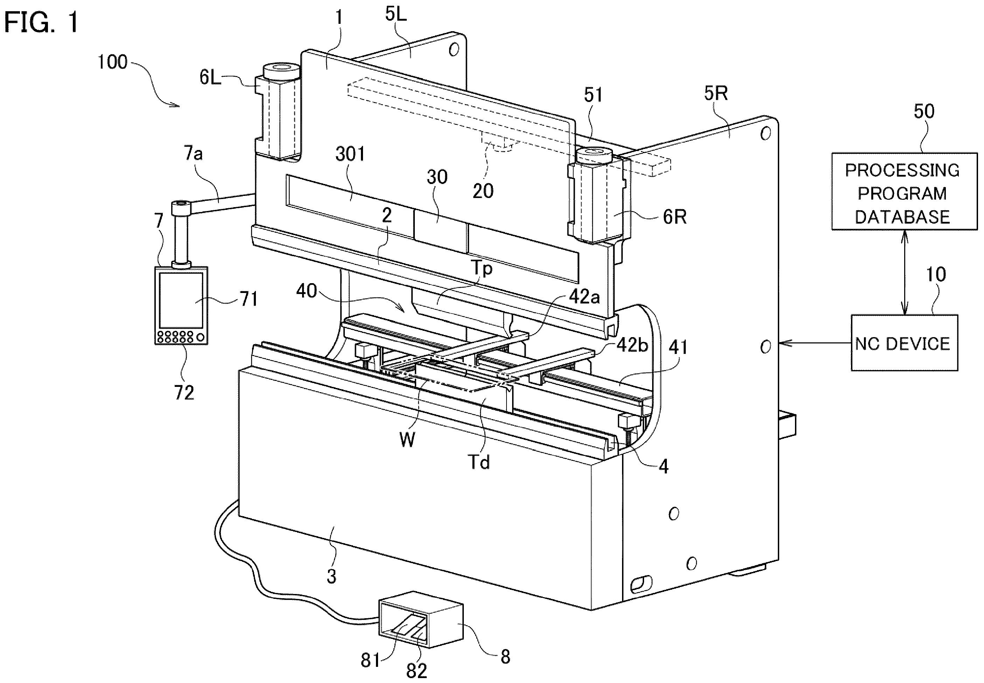

FIG. 1 shows an overall configuration of a press brake 100 according to one or more embodiments. As shown in FIG. 1, the press brake 100 includes a numerical control (NC) device 10 that functions as a press brake control device. To the NC device 10, a processing program database 50 is connected via a network. The press brake 100 includes an upper table 1, a lower table 3, and right and left side panels 5R and 5L. An upper tool holder 2 is attached to the upper table 1, and a lower tool holder 4 is attached to the lower table 3. The upper table 1 is configured to be vertically moved by hydraulic cylinders 6R and 6L provided on the right and left.

A punch Tp, which is an upper tool, is fitted to the upper tool holder 2, and a die Td, which is a lower tool, is fitted to the lower tool holder 4. Though a modular type in which the upper tool holder 2 is integrally attached to the entire length of the lower end of the upper table 1 is shown in FIG. 1, an intermediate plate type in which a plurality of intermediate plates to be fitted with the punch Tp are attached in a longitudinal direction of the lower end of the upper table 1 may be adopted. The intermediate plates are also upper tool holders.

To fit the punch Tp to the upper table 1 means to fit the punch Tp to the upper tool holder 2 or the intermediate plates. To fit the die Td to the lower table 3 means to fit the die Td to the lower tool holder 4. Two or more punches Tp may be fitted to the upper table 1 side by side, and two or more dies Td may be fitted to the lower table 3 side by side.

A back gauge 40 is arranged on the back side of the lower table 3. The back gauge 40 is provided with abutments 42a and 42b that move in the left/right direction along a back gauge carriage 41. Though it is assumed here that the two abutments 42a and 42b are provided, there may be a case in which one, three, or four abutments are provided. An arbitrary abutment will be referred to as an abutment 42. The abutment 42 is configured to move both in the height direction and in the forward/backward direction.

Before an operator places a workpiece W, which is a sheet metal to be processed, on the die Td and bends the workpiece W, the abutment 42 moves to a position corresponding to the die Td. The operator places the workpiece W on the die Td in a manner of causing the end of the workpiece W on the far side to abut the abutment 42. That is, the abutment 42 acts to define the position of workpiece W in the forward/backward direction at the time of placing the workpiece W on the die Td.

On the left side of the press brake 100, an operation pendant 7, which includes a display 71 and an operation unit 72 with a plurality of operation buttons, is attached via an arm 7a. The operation pendant 7 is connected to the NC device 10. A foot switch 8, which includes a close foot switch 81 for lowering the upper table 1 and an open foot switch 82 for raising the upper table 1, is connected to the NC device 10.

The right and left side panels 5R and 5L are coupled via a coupling bar 51. The coupling bar 51 is located behind the upper table 1 and at upper parts of the right and left side panels 5R and 5L. A camera 20 is fitted to the lower surface of the coupling bar 51, in the center of the left/right direction of the coupling bar 51. The camera 20 is arranged on the back side of the upper table 1 to capture an image in the direction of the lower table 3. It is preferred that the camera 20 includes a fisheye lens so as to be capable of capturing an image from the right-side end to left-side end of the lower table 3. It is preferable that the camera 20 includes a fisheye lens, since this allows for capturing images of a wide range.

The camera 20 may include a wide-angle lens or an ultra-wide-angle lens instead of the fisheye lens if it is possible to capture an image from the right-side end to left-side end of the lower table 3. An image captured by the camera 20 is supplied to the NC device 10.

A tablet device 30, which is an example of the display device, is fitted to the surface of the upper table 1. It is preferable that the tablet device 30 is attachable to and detachable from the upper table 1. On the upper table 1, a fitting portion 301 for the tablet device 30 extending in the left/right direction is formed. It is preferable that the tablet device 30 is configured such that the fitting position relative to the upper table 1 in the left/right direction can be changed along the fitting portion 301. The fitting portion 301 may be configured such that the tablet device 30 can be fitted into a recess portion thereof, for example, or may be configured such that the tablet device 30 can be fitted to the fitting portion 301 with a magnet, for example. The configuration for fitting the tablet device 30 to the upper table 1 and the configuration for causing the tablet device 30 to be movable in the left/right direction are not limited.

The tablet device 30 is connected to the NC device 10. As an example, the NC device 10 and the tablet device 30 are connected via a wireless LAN. Typically, Wi-Fi, which is a wireless LAN in conformity with the communication standard IEEE 802.11, can be used. The NC device 10 and the tablet device 30 may be connected via Bluetooth (registered trademark) which is an example of near field wireless communication standards. It is preferable that the NC device 10 and the tablet device 30 are connected to each other via wireless communication, since it is easy to move the tablet device 30, and it is also possible to remove the tablet device 30 from the fitting portion 301 for use. The NC device 10 and the tablet device 30, however, may be connected by wire.

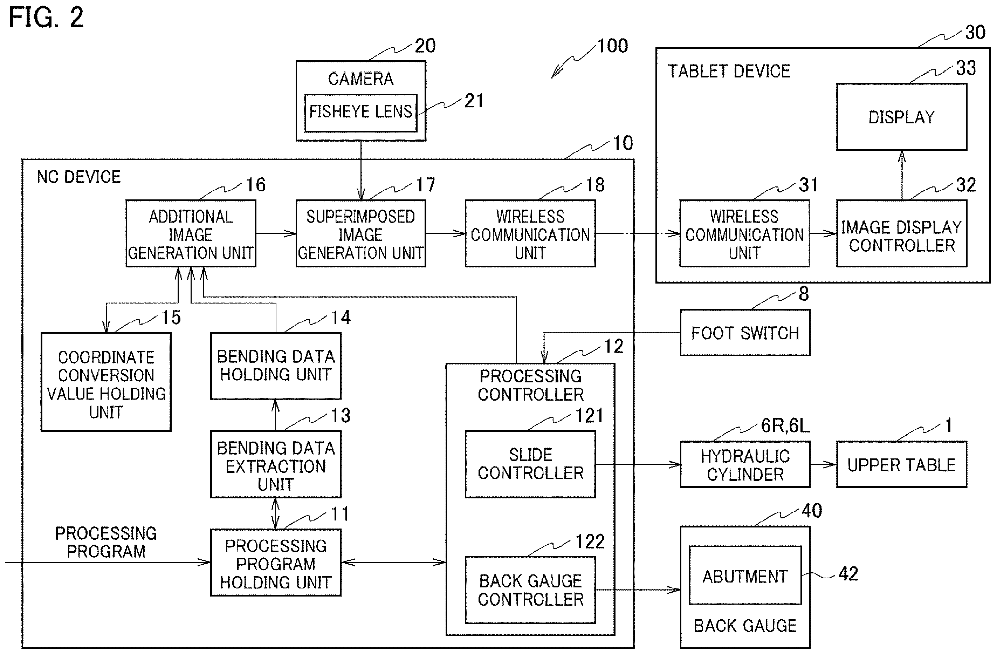

FIG. 2 is a block diagram showing the press brake 100 according to one or more embodiments. Operation of the press brake 100 will be described using FIG. 2. The NC device 10 includes a processing program holding unit 11, a processing controller 12, a bending data extraction unit 13, a bending data holding unit 14, a coordinate conversion value holding unit 15, an additional image generation unit 16, a superimposed image generation unit 17, and a wireless communication unit 18. The processing controller 12 includes a slide controller 121 that controls the hydraulic cylinders 6R and 6L and a back gauge controller 122 that controls the back gauge 40. The camera 20 includes a fisheye lens 21. The tablet device 30 includes a wireless communication unit 31, an image display controller 32, and a display 33. The wireless communication units 18 and 31 communicate with each other via the wireless LAN or near field wireless communication described above.

The processing program holding unit 11, the bending data holding unit 14, and the coordinate conversion value holding unit 15 can be constituted of a storage unit included in the NC device 10. The processing controller 12, the bending data extraction unit 13, the additional image generation unit 16, and the superimposed image generation unit 17 can be functionally formed by a central processing unit included in the NC device 10 executing software. The wireless communication unit 18 can be constituted of a circuit that executes wireless communication and an antenna. The wireless communication unit 31 can be constituted of a circuit that executes wireless communication and an antenna. The image display controller 32 can be functionally formed by a central processing unit included in the tablet device 30 executing software. The display 33 is a liquid crystal panel, for example.

At the time of trying to process the workpiece W, the processing program holding unit 11 holds a processing program read by the NC device 10 from the processing program database 50. When the processing program is held in the processing program holding unit 11, and the processing controller 12 is instructed to start processing of the workpiece W, the processing controller 12 controls processing of the workpiece W according to the processing program. The back gauge controller 122 controls the back gauge 40 to move the abutment 42 according to the processing program. The slide controller 121 controls the hydraulic cylinders 6R and 6L to slide the upper table 1 according to the processing program, in response to an operation of the foot switch 8.

When the processing program is held in the processing program holding unit 11, the bending data extraction unit 13 extracts bending data shown below from the processing program.

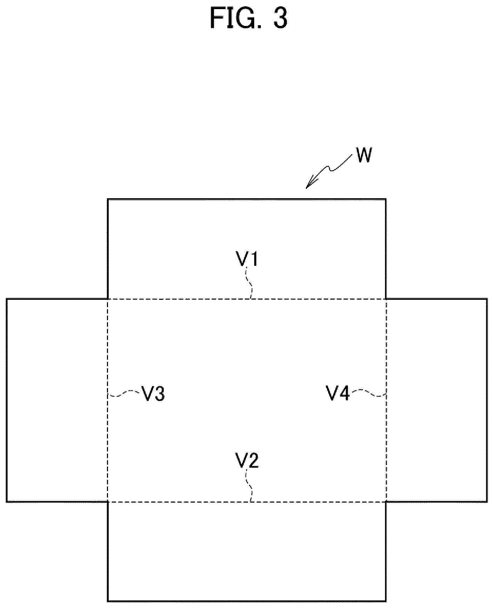

The bending data extracted from the processing program includes shape information about the workpiece W, position information about a position to place the workpiece W in each bending process of the workpiece W, and bending line information showing a position of bending of the workpiece W in each process. FIG. 3 shows an example of the shape of the workpiece W to be bent by the press brake 100. When the workpiece W shown in FIG. 3 is exemplified, the shape information about the workpiece W is represented by coordinate values identifying the shape of the workpiece W. The position information about the workpiece W is position information indicating where on the lower table 3 in the left/right direction and in the depth direction the workpiece W is to be placed. The position information about the workpiece W can be obtained from a three-dimensional model in the processing program. The workpiece W shown in FIG. 3 includes bending lines V1 to V4, and the bending data includes bending line information indicating the bending lines V1 to V4. The bending data includes bending order information indicating bending order of the bending lines V1 to V4.

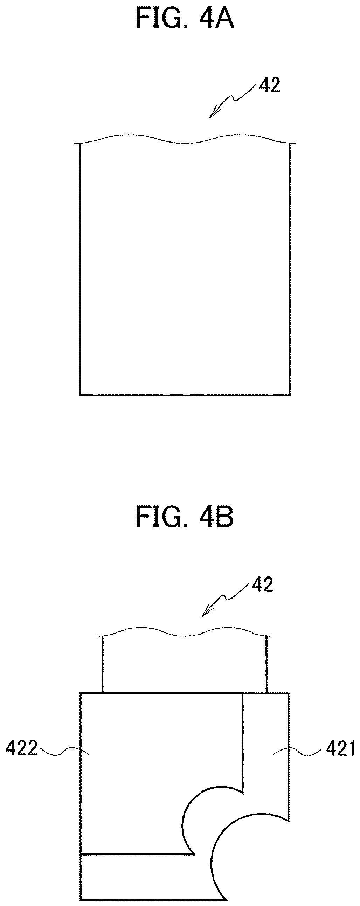

In addition, the bending data includes abutment identification information identifying the abutment 42 to be used in each bending process, abutment coordinates in real space where the abutment 42 is to be positioned in each bending process, and abutting area information indicating an area of the abutment 42 to be abutted by the workpiece W in each bending process. The abutment identification information is represented by a number identifying each of abutments 42 in various shapes. FIGS. 4A and 4B show first and second examples of the shape of the abutment 42, respectively.

The abutment 42 of the first example shown in FIG. 4A is in a plate shape with a rectangular end on the distal end side. The abutment 42 of the second example shown in FIG. 4B includes a lower portion 421 and an upper portion 422, and semicircular recess portions are formed on the lower portion 421 and the upper portion 422. Which shape of abutment 42 is to be used is identified by the abutment identification information.

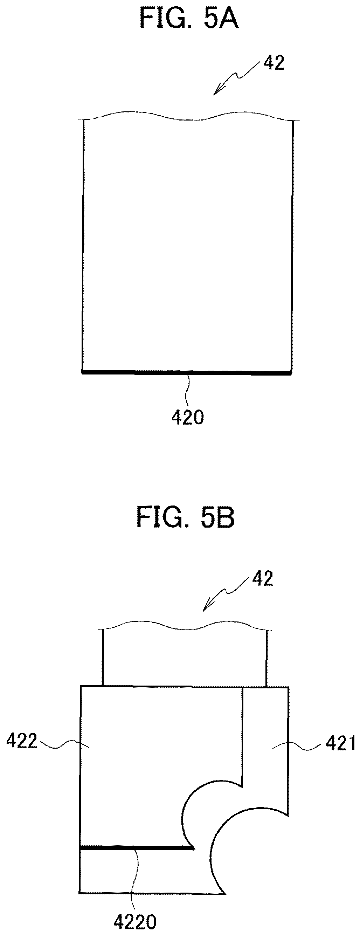

The abutment coordinates indicate where on the lower table 3 in the left/right direction and in the depth direction the abutment 42 is to be arranged. FIGS. 5A and 5B show abutting areas to be butted by the workpiece W when the abutments 42 of the first and second examples shown in FIGS. 4A and 4B are used, respectively. As indicated by a thick solid line in FIG. 5A, the abutting area of the abutment 42 shown in FIG. 4A is a distal end surface 420 of the abutment 42, and the abutting area information is information indicating the position of the distal end surface 420 of the abutment 42. As indicated by a thick solid line in FIG. 5B, the abutting area of the abutment 42 shown in FIG. 4B is a distal end surface 4220 of the upper portion 422, for example, and the abutting area information is information indicating the position of the distal end surface 4220 of the upper portion 422.

Returning to FIG. 2, the bending data holding unit 14 holds the bending data extracted by the bending data extraction unit 13. The coordinate conversion value holding unit 15 holds the coordinate conversion values for converting a position in real space the camera 20 captures an image of to a position on the image captured by the camera 20. The coordinate conversion values can be constituted of a set of two-dimensional conversion values for converting two-dimensional coordinates in real space the camera 20 captures an image of to two-dimensional coordinates on the image captured by the camera 20.

The additional image generation unit 16 generates additional images to be added to the image captured by the camera 20 based on the bending data held in the bending data holding unit 14 and the coordinate conversion values held in the coordinate conversion value holding unit 15. In order to generate the additional images, the additional image generation unit 16 uses the shape information about the workpiece W, and the position information about the position to place the workpiece W, the bending line information about the workpiece W, the abutment identification information, the abutment coordinates, and the abutting area information for each bending process. The additional image generation unit 16 generates the additional images for each bending process.

The additional image generation unit 16 holds coordinate values identifying the shape of abutment 42 for each piece of abutment identification information. Therefore, the additional image generation unit 16 can generate an abutment image to be described later, based on the abutment identification information.

The captured image outputted from the camera 20 and the additional images from the additional image generation unit 16 are supplied to the superimposed image generation unit 17. Since the camera 20 includes the fisheye lens 21, the image captured by the camera 20 is a distorted image with an angle of view of 180 degrees. The camera 20, however, is configured to output the captured image in a state of the distortion being corrected in order to reduce visually uncomfortable feeling. Therefore, the captured image supplied to the superimposed image generation unit 17 is an image that does not give visually uncomfortable feeling almost at all.

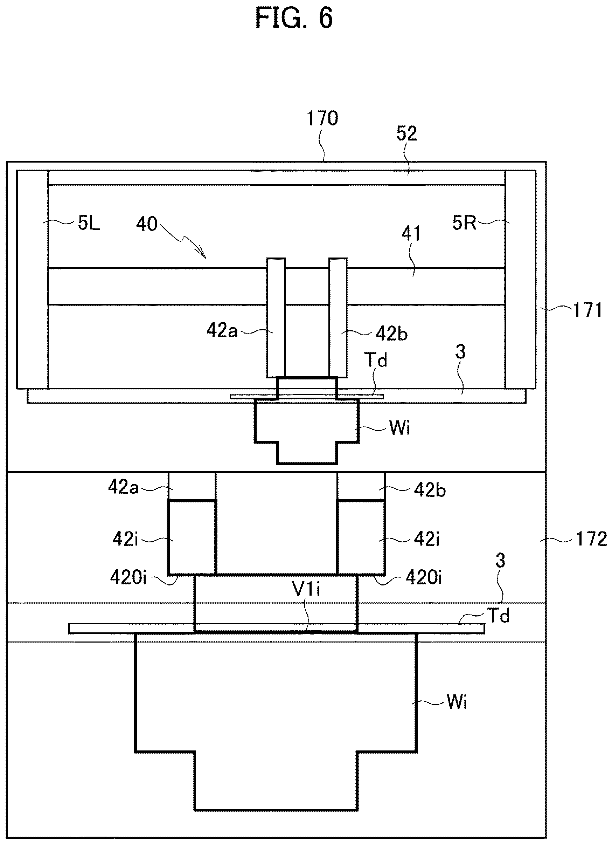

The superimposed image generation unit 17 generates a superimposed image obtained by superimposing the additional images on the captured image. FIG. 6 shows an example of parallel images generated and transmitted to the tablet device 30 by the NC device 10. As shown in FIG. 6, it is preferable that the superimposed image generation unit 17 generates parallel images 170, including a wide-range image 171 based on the angle of view of the camera 20 and an enlarged image 172, which is an enlarged partial area of the wide-range image 171, arranged vertically, for example. It is preferable that the wide-range image 171 corresponds to the entire angle of view of the camera 20. The wide-range image 171 includes the lower table 3, the right and left side panels 5R and 5L, the back gauge 40, and the whole of a door 52 at the rear which is not shown in FIG. 1. A workpiece shape image Wi based on the shape information about the workpiece W is superimposed on the wide-range image 171.

The enlarged image 172 includes the entire die Td, parts of the lower table 3 and the abutments 42a and 42b. On the enlarged image 172, the workpiece shape image Wi, a bending line image V1i, abutment images 42i, and abutting area images 420i are superimposed. Each abutment image 42i here shows the shape of a distal-end side end of the abutment 42.

It is not indispensable to superimpose all of the workpiece shape image Wi, the bending line image V1i, the abutment images 42i, and the abutting area images 420i on the enlarged image 172, and it is only required to superimpose at least the workpiece shape image Wi and the abutting area images 420i on the enlarged image 172. If the workpiece shape image Wi and the abutting area images 420i are superimposed on the enlarged image 172, it becomes possible for the operator to perform bending of the workpiece W while visually recognizing at which positions of the abutments 42 the operator should cause the workpiece W to abut against the abutments 42.

It is necessary to superimpose the bending line image V1i on the enlarged image 172, in addition to the workpiece shape image Wi and the abutting area images 420i. If the workpiece shape image Wi and the abutting area images 420i are superimposed on the enlarged image 172, it becomes possible for the operator to perform bending of the workpiece W while visually recognizing at which position the workpiece W should be bent and at which positions of the abutments 42 the operator should cause the workpiece W to abut against the abutments 42.

It is further preferable to superimpose the bending line image V1i and the abutment images 42i on the enlarged image 172, in addition to the workpiece shape image Wi and the abutting area images 420i. If the abutment images 42i are superimposed on the enlarged image 172, it becomes easy for the operator to recognize the positions of the abutments 42. When both the abutment images 42i and the abutting area images 420i are superimposed on the enlarged image 172, it is preferable to make the both images have different colors.

Though only the workpiece shape image Wi is superimposed on the wide-range image 171 in the parallel images shown in FIG. 6, the abutting area images 420i may also be superimposed. The bending line image V1i may also be superimposed on the wide-range image 171 in addition to the workpiece shape image Wi and the abutting area images 420i. The bending line image V1i and the abutment images 42i may also be superimposed on the wide-range image 171 in addition to the workpiece shape image Wi and the abutting area images 420i.

In the case of superimposing only the workpiece shape image Wi and the abutting area images 420i on the enlarged image 172 (or the wide-range image 171), the bending data extraction unit 13 can extract the shape information about the workpiece W, the position information about the position to place the workpiece W, the abutment identification information, the abutment coordinates, and the abutting area information from the processing program.

The wireless communication unit 18 wirelessly transmits the parallel images 170 shown in FIG. 6 to the wireless communication unit 31 of the tablet device 30. The wireless communication unit 31 receives the parallel images 170 and supplies them to the image display controller 32. The image display controller 32 supplies the parallel images 170 to the display 33 and controls the display 33 to display the parallel images 170 on the display 33.

Since the parallel images 170 shown in FIG. 6 are displayed on the tablet device 30 fitted to the surface of the upper table 1, the operator can confirm the wide-range image 171 and the enlarged image 172 and perform bending of the workpiece W while visually recognizing at which position the workpiece W is to be bent and at which positions of the abutments 42 the operator should cause the workpiece W to abut against the abutments 42. At this time, the tablet device 30 is located almost directly in front of the operator. Therefore, the operator does not need to move to the side or turn his or her face to the side as he or she does at the time of confirming information displayed on the display 71 of the operation pendant 7.

Especially, when there are a plurality of areas to be abutted by the workpiece W like the abutment 42 of the second example shown in FIG. 4B, it is possible to, by a abutting area image being superimposed on the enlarged image 172, prevent the operator from recognizing a wrong position as the area to be abutted by the workpiece W. When the abutment 42 of the second example is used, and the distal end surface 4220 of the upper portion 422 is the area to be abutted, a abutting area image is superimposed at the position of the distal end surface 4220.

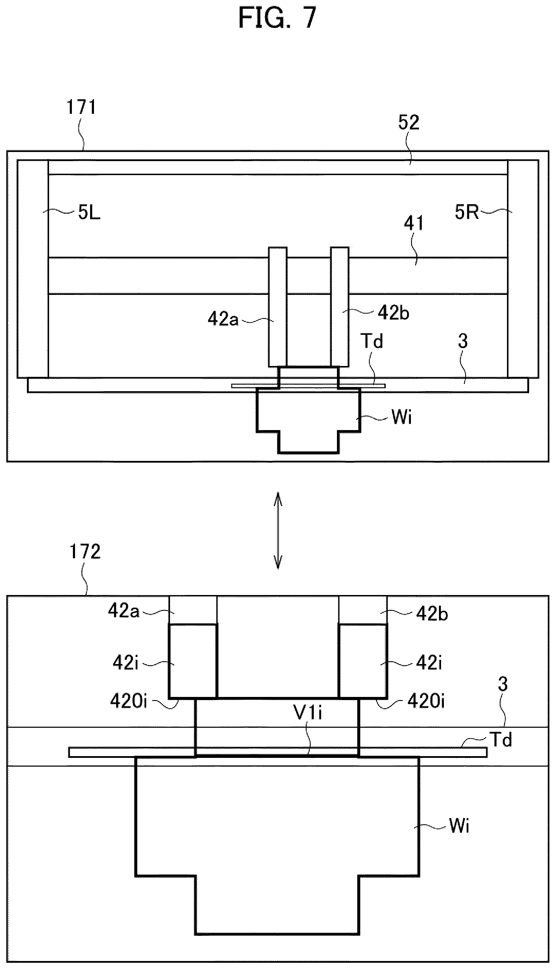

FIG. 7 shows an example of alternative images generated and transmitted to the tablet device 30 by the NC device 10. As shown in FIG. 7, instead of the parallel images 170 shown in FIG. 6, the superimposed image generation unit 17 may alternately generate the wide-range image 171 and the enlarged image 172, and the wireless communication unit 18 may alternately transmit the wide-range image 171 and the enlarged image 172 to the wireless communication unit 31. The superimposed image generation unit 17 switches between the wide-range image 171 and the enlarged image 172 at predetermined intervals of two or three seconds, for example. On the display 33 of the tablet device 30, the alternate images, which are the wide-range image 171 and the enlarged image 172 switched at the predetermined intervals, are displayed. Similarly to the case of the parallel images 170 being displayed on the tablet device 30, the operator can confirm the wide-range image 171 and the enlarged image 172 and perform bending of the workpiece W while visually recognizing a position to bend the workpiece W and positions to be abutted by the workpiece W against the abutments 42.

When the workpiece W shown in FIG. 3 is a processing target, the superimposed image generation unit 17 generates parallel images or alternate images similar to those of FIG. 6 or 7 for each of bending processes for the bending lines V1 to V4 according to the processing program, and the parallel images or the alternate images are displayed on the tablet device 30. Therefore, the operator can perform bending of the workpiece W while visually recognizing a position to bend the workpiece W and positions to be abutted by the workpiece W against the abutments 42 in all the bending processes.

Positions on the upper table 1 and the lower table 3 where the punch Tp and the die Td are to be fitted, respectively, are set by a tool layout of the processing program, for each of the bending processes for the bending lines V1 to V4. That is, which positions of the upper table 1 and the lower table 3 in the left/right direction the bending of the workpiece W is to be performed is set by the tool layout. If, when the position of bending of the workpiece W in the left/right direction is not fixed in the center, and the position of bending is shifted in any of the left and right directions, the tablet device 30 may be moved according to the position of bending of the workpiece W along the fitting portion 301. In this way, the tablet device 30 can be positioned almost directly in front of the operator at all times.

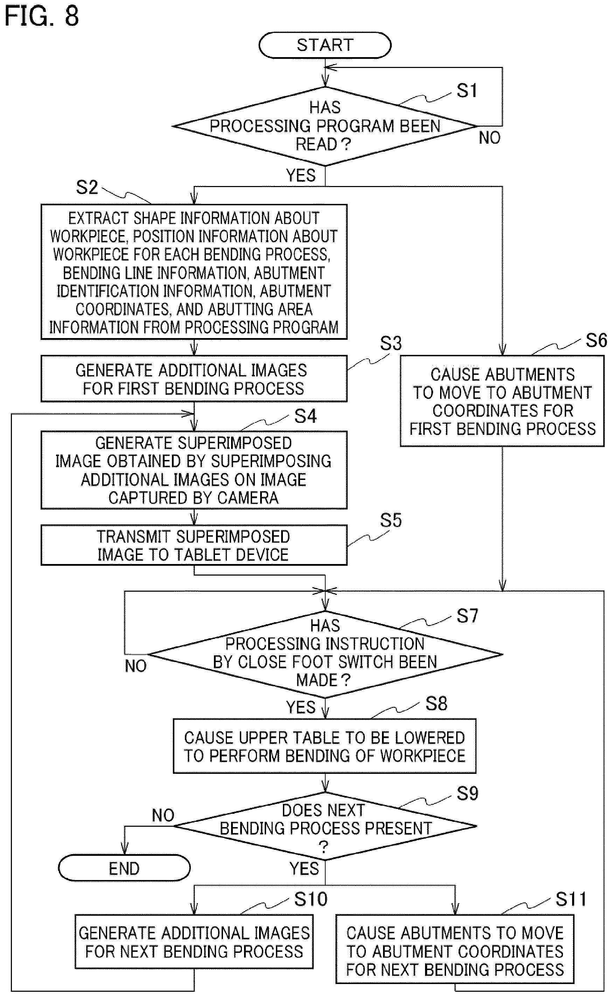

A first example of a process executed by the NC device 10 will be described using a flowchart shown in FIG. 8. In FIG. 8, when the process of the NC device 10 is started, the processing controller 12 determines whether or not the processing program has been read into the NC device 10 in step S1. If the processing program has not been read into the NC device 10 (NO), the processing controller 12 repeats the process of step S1. If the processing program has been read into the NC device 10 (YES), the bending data extraction unit 13 extracts the shape information about the workpiece W, the position information about the workpiece W, the bending line information, the abutment identification information, the abutment coordinates, and the abutting area information for each bending process, from the processing program in step S2.

In step S3, the additional image generation unit 16 generates additional images for the first bending process. In step S4, the superimposed image generation unit 17 generates a superimposed image obtained by superimposing the additional images on an image captured by the camera 20. The wireless communication unit 18 transmits the superimposed image to the tablet device 30 in step 5 and then causes the process to transition to step S7.

In parallel with steps S2 to S5, the processing controller 12 (the back gauge controller 122) causes the abutments 42 to move to abutment coordinates for the first bending process in step S6 and then causes the process to transition to step S7. By the operator executing a predetermined operation by the operation unit 72 of the operation pendant 7, the press brake 100 transitions to a processing preparation state, though it is not shown in FIG. 8. The processing controller 12 executes step S6 in the processing preparation state.

In step S7, the processing controller 12 determines whether or not a processing instruction by the close foot switch 81 has been made. If a processing instruction has not been made (NO), the processing controller 12 repeats the process of step S7. If a processing instruction has been made (YES), the processing controller 12 (the slide controller 121) causes the upper table 1 to be lowered to perform bending of the workpiece W in step S8 and then causes the process to transition to step S9. In step S9, the processing controller 12 determines whether or not there is a next bending process. If there is not a next bending process (NO), the processing controller 12 causes the process to end.

If there is a next bending process in step S9 (YES), the additional image generation unit 16 generates additional images for the next bending process in step S10 and then causes the process to transition to step S4. In parallel with steps S10, the processing controller 12 (the back gauge controller 122) causes the abutments 42 to move to abutment coordinates for the next bending process in step S11 and then causes the process to transition to step S7.

When the additional image generation unit 16 has generated additional images in each of all the bending processes, the wireless communication unit 18 has transmitted a superimposed image to the tablet device 30 in each of all the bending processes, and the processing controller 12 performed bending of the workpiece W in each of all the bending processes, the NC device 10 causes the series of processes to end.

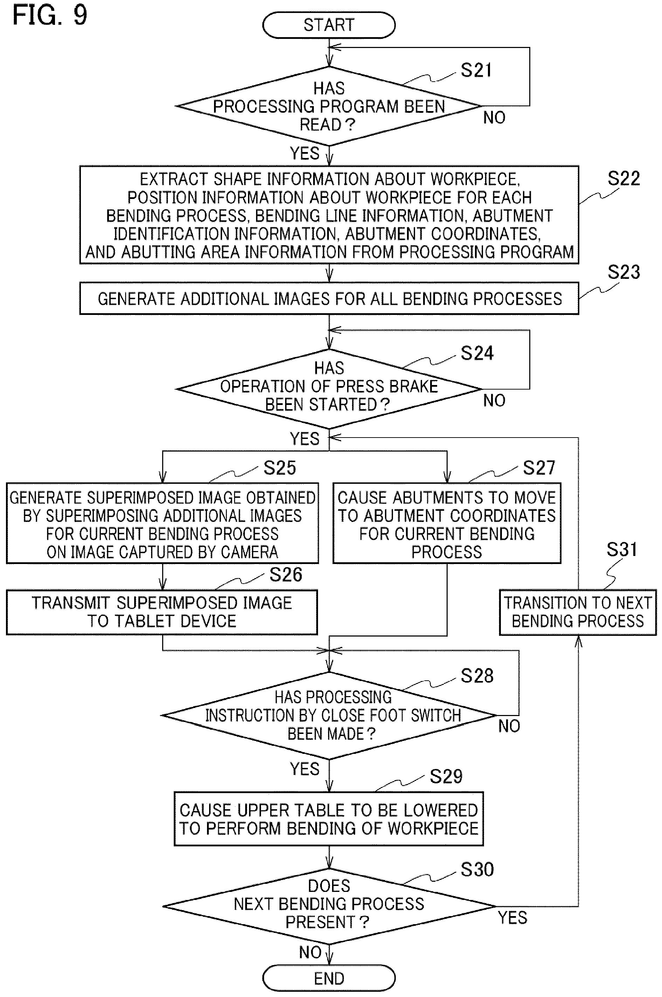

A second example of the process executed by the NC device 10 will be described using a flowchart shown in FIG. 9. In the first example shown in FIG. 8, the additional image generation unit 16 generates additional images for each bending process. In the second example shown in FIG. 9, the additional image generation unit 16 generates additional images for all the bending processes in advance.

In FIG. 9, when the process of the NC device 10 is started, the processing controller 12 determines whether or not the processing program has been read into the NC device 10 in step S21. If the processing program has not been read into the NC device 10 (NO), the processing controller 12 repeats the process of step S21. If the processing program has been read into the NC device 10 (YES), the bending data extraction unit 13 extracts the shape information about the workpiece W, the position information about the workpiece W, the bending line information, the abutment identification information, the abutment coordinates, and the abutting area information for each bending process, from the processing program in step S22.

In step S23, the additional image generation unit 16 generates additional images for all the bending processes. In step S24, the NC device 10 determines whether or not operation of the press brake 100 has been started by operating the operation unit 72. If operation of the press brake 100 has not been started (NO), the NC device 10 repeats the process of step S24. If operation of the press brake 100 has been started (YES), the superimposed image generation unit 17 generates a superimposed image obtained by superimposing the additional images for the current bending process on an image captured by the camera 20 in step S25. The current bending process is each of the first bending process, the second bending process, the third bending process, ....

The wireless communication unit 18 transmits the superimposed image to the tablet device 30 in step 26 and then causes the process to transition to step S28.

In parallel with steps S25 and S26, the processing controller 12 (the back gauge controller 122) causes the abutments 42 to move to abutment coordinates for the current bending process in step S27 and then causes the process to transition to step S28.

In step S28, the processing controller 12 determines whether or not a processing instruction by the close foot switch 81 has been made. If a processing instruction has not been made (NO), the processing controller 12 repeats the process of step S28. If a processing instruction has been made (YES), the processing controller 12 (the slide controller 121) causes the upper table 1 to be lowered to perform bending of the workpiece W in step S29, and then causes the process to transition to step S30.

In step S30, the processing controller 12 determines whether or not there is a next bending process. If there is a next bending process (YES), the processing controller 12 causes the process to transition to the next bending process in step S31 and returns the process to steps S25 and S27, and the processes of steps S25 to S30 are repeated. If there is not a next bending process (NO), the NC device 10 causes the series of processes to end.

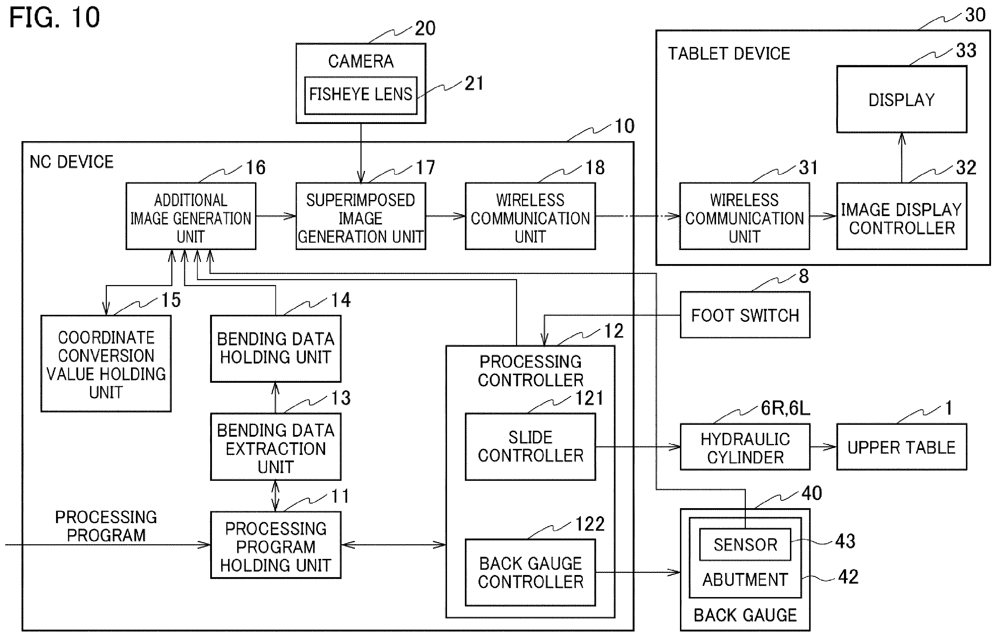

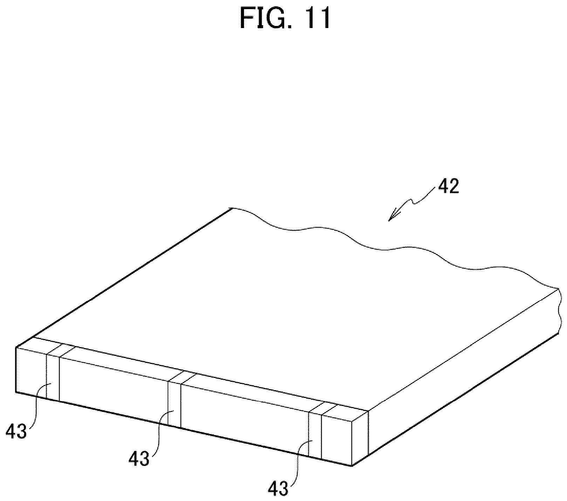

FIG. 10 shows a more preferred configuration of the NC device 10. The same parts as those of FIG. 2 are given the same reference signs in FIG. 10, and description thereof will be omitted. The abutment 42 includes sensors 43 that detect contact of the workpiece W. As shown in FIG. 11, the abutment 42 of the first example shown in FIG. 4A includes three sensors 43 in the distal end surface. Outputs from the sensors 43 are supplied to the additional image generation unit 16. It is preferable that the additional image generation unit 16 causes a display state of a abutting area image like the abutting area images 420i of FIG. 6 or 7 to be different between a state of the sensors 43 not having detected contact of the workpiece W and a state of the sensor 43 having detected contact of the workpiece W. The display state refers to the line color, line type, or line thickness of the abutting area image, for example. The operator can recognize whether or not the workpiece W has made contact with the abutment 42 based on the display state of the abutting area image.

It is preferable that the additional image generation unit 16 causes the color of the abutting area image to be different between the state of the sensor 43 not having detected contact of the workpiece W and the state of the sensor 43 having detected contact of the workpiece W. As an example, in a state in which the distal end of the workpiece W has not reached the abutment 42, and the sensors 43 have not detected contact of the workpiece W, the additional image generation unit 16 causes the abutting area image to be red. As an example, in a state in which the distal end of the workpiece W has reached the abutment 42, and the sensor 43 has detected contact of the workpiece W, the additional image generation unit 16 causes the abutting area image to be blue. The operator can easily recognize whether or not the workpiece W has made contact with the abutment 42 according to the color of the abutting area image.

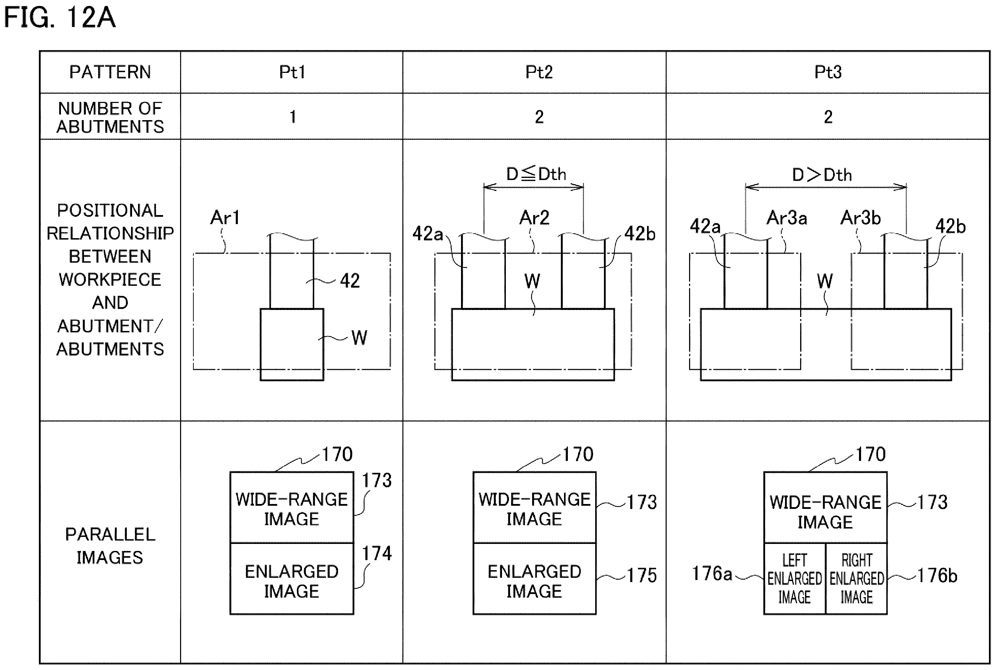

As for the enlarged image 172 between the parallel images 170 shown in FIG. 6, it is preferable to cause the enlarged image 172 to be different based on the number of abutments 42 defining the position of the workpiece W in the depth direction. A pattern Pt1 shown in FIG. 12A shows a case in which the number of abutments 42 is one, and the workpiece W is caused to contact a single abutment 42. At this time, the superimposed image generation unit 17 generates one enlarged image 174 obtained by enlarging an area Ar1 represented by a one-dot chain line in a wide-range image 173. The wide-range image 173 is an image corresponding to the wide-range image 171 between the parallel images 170 shown in FIG. 6.

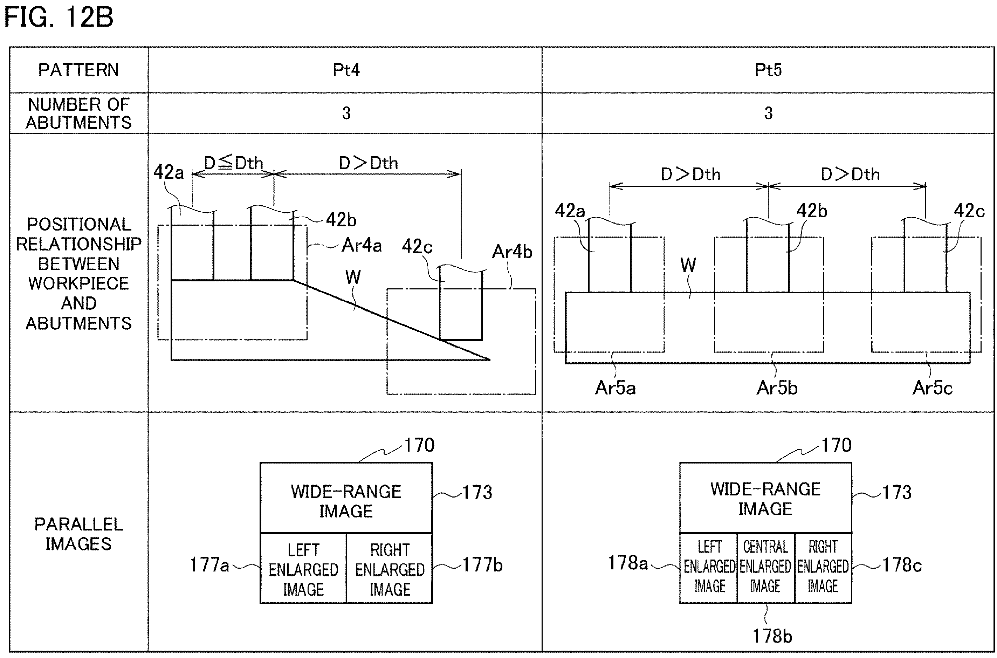

FIGS. 12A and 12B show examples of a way of generating an enlarged image in the case of causing the workpiece W to contact one, two, or three abutments 42. A pattern Pt2 shown in FIG. 12A shows a case in which the number of abutments 42 is two, the workpiece W is caused to contact the abutments 42a and 42b, and a distance D in the left/right direction between the abutments 42a and 42b is within a predetermined threshold Dth. At this time, the superimposed image generation unit 17 generates one enlarged image 175 obtained by enlarging an area Ar2 represented by a one-dot chain line in a wide-range image 173.

A pattern Pt3 shown in FIG. 12A shows a case in which the number of abutments 42 is two, the workpiece W is caused to contact the abutments 42a and 42b, and the distance D in the left/right direction between the abutments 42a and 42b exceeds the threshold Dth. At this time, the superimposed image generation unit 17 generates a left enlarged image 176a obtained by enlarging an area Ar3a in the wide-range image 173 represented by a one-dot chain line and including the abutment 42a, and a right enlarged image 176b obtained by enlarging an area Ar3b represented by a one-dot chain line and including the abutment 42b. The superimposed image generation unit 17 arranges the left enlarged image 176a and the right enlarged image 176b on the left and right, side by side.

A pattern Pt4 shown in FIG. 12B shows a case in which the number of abutments 42 is three, and the workpiece W is caused to contact the abutments 42a to 42c. The pattern Pt4 shows a case in which the distance D in the left/right direction between the abutments 42a and 42b is within the threshold Dth, and the distance D in the left/right direction between the abutments 42b and 42c exceeds the threshold Dth. At this time, the superimposed image generation unit 17 generates a left enlarged image 177a obtained by enlarging an area Ar4a in the wide-range image 173 represented by a one-dot chain line and including the abutments 42a and 42b, and a right enlarged image 177b obtained by enlarging an area Ar4b represented by a one-dot chain line and including the abutment 42c. The superimposed image generation unit 17 arranges the left enlarged image 177a and the right enlarged image 177b on the left and right, side by side.

A pattern Pt5 shown in FIG. 12B shows a case in which the number of abutments 42 is three, and the workpiece W is caused to contact the abutments 42a to 42c. The pattern Pt5 shows a case in which both of the distance D in the left/right direction between the abutments 42a and 42b and the distance D in the left/right direction between the abutments 42b and 42c exceed the threshold Dth. At this time, the superimposed image generation unit 17 generates a left enlarged image 178a obtained by enlarging an area Ar5a in the wide-range image 173 represented by a one-dot chain line and including the abutment 42a, a central enlarged image 178b obtained by enlarging an area Ar5b represented by a one-dot chain line and including the abutment 42b, and a right enlarged image 178c obtained by enlarging an area Ar5c represented by a one-dot chain line and including the abutment 42c.

The superimposed image generation unit 17 arranges the left enlarged image 178a, the central enlarged image 178b, and the right enlarged image 178c in the left/right direction.

In this way, if the distance D in the left/right direction between two abutments 42 adjacent to each other is within the threshold Dth, the superimposed image generation unit 17 generates one enlarged image such that the two abutments 42 are included therein. If the distance D in the left/right direction between two abutments 42 adjacent to each other exceeds the threshold Dth, the superimposed image generation unit 17 generates individual enlarged images such that the two abutments 42 are included in the separate enlarged images.

In FIGS. 12A and 12B, on each of the enlarged images 174 and 175, the left enlarged images 176a, 177a, and 178a, the right enlarged images 176b, 177b, and 178c, and the central enlarged image 178b, at least the workpiece shape image, the bending line image, and the abutting area image are superimposed similarly to FIG. 6. In the case of adopting alternate images as shown in FIG. 7, the enlarged images 174 and 175, the left enlarged images 176a, 177a, and 178a, the right enlarged images 176b, 177b, and 178c, and the central enlarged image 178b shown in FIGS. 12A and 12B are similarly used.

The enlarged image display methods shown in FIGS. 12A and 12B are useful display methods when the operator confirms an enlarged image no matter whether or not a workpiece shape image, a bending line image, an abutting area image, and the like are imposed on the enlarged image. Further, the enlarged image display methods shown in FIGS. 12A and 12B are also useful display methods in the case of displaying not the parallel images 170 including the wide-range image 173 but only an enlarged image alone.

The present invention is not limited to one or more embodiments described above, and various changes can be made within a range not departing from the scope of the present invention. The display device for displaying the parallel images 170 as shown in FIG. 6 or the alternate images as shown in FIG. 7 is not limited to the tablet device 30 but may be a projector. In the case of adopting a projector as the display device, the projector can project an image on the surface of the upper table 1.

The NC device 10 may determine that setup is underway when the workpiece W is moving, based on an image captured by the camera 20 and prevent the upper table 1 from sliding. The NC device 10 may warn the operator when it detects that the positions of the punch Tp and the die Td are different from the tool layout, based on an image captured by the camera 20. The NC device 10 may warn the operator when it detects that a bending line of the workpiece W along which the operator tries to bend the workpiece W and a bending line targeted by bending according to the processing program then are different, based on an image captured by the camera 20.

The present application claims priority based on Japanese Patent Application No. 2022-101221 filed with the Japan Patent Office on June 23, 2022.

## Claims

1. A press brake (100) comprising:
an upper table (1) to be fitted with a punch (Tp);
a lower table (3) to be fitted with a die (Td);
an NC device (10) configured to control bending of a workpiece (W) by the punch (Tp) and the die (Td) based on a processing program;
a back gauge (40) arranged on a back side of the lower table (3) and comprising one or more abutments (42) defining a position in a depth direction at a time of placing the workpiece (W) on the die (Td);
a camera (20) arranged on a back side of the upper table (1) and configured to capture an image in a direction of the lower table (3); and
a display device (30) configured to display the image captured by the camera (20),
**characterized in that**
the NC device (10) comprises:
an additional image generation unit (16) configured to generate, based on shape information about the workpiece (W), position information about a position to place the workpiece (W) in each of bending processes of the workpiece (W), abutment identification information identifying an abutment (42) to be used in each of the bending processes, abutment coordinates in real space to position the abutment (42) in each of the bending processes, and abutting area information indicating an area of the abutment (42) to be abutted by the workpiece (W) in each of the bending processes extracted from the processing program, and coordinate conversion values for converting a position in the real space the camera (20) captures an image of to a position on the captured image, an additional image to be added to the captured image, including a workpiece shape image (Wi) showing a shape of the workpiece (W), a bending line image (V1i) indicating a position of a bending line (V1-V4), and an abutting area image (420i) showing the area of the abutment (42) to be abutted by the workpiece (W); and
a superimposed image generation unit (17) configured to generate a superimposed image to be displayed on the display device (30) by superimposing the additional image on the captured image, wherein
the superimposed image generation unit (17) is configured to generate parallel images, including a wide-range image (171, 173) based on an angle of view of the camera (20) and an enlarged image (172, 174, 175, 176a, 176b, 177a, 177b, 178a-178c) obtained by enlarging a partial area of the wide-range image (171, 173) and superimposing the workpiece shape image (Wi), the bending line image (V1i), and the abutting area image (420i) thereon, or alternate images, the alternate images being the wide-range image (171, 173) and the enlarged image (172, 174, 175, 176a, 176b, 177a, 177b, 178a-178c) to be alternately switched.

2. The press brake (100) according to claim 1, wherein the camera (20) comprises a fisheye lens.

3. The press brake (100) according to claim 1 or 2, wherein the display device (30) is fitted to a surface of the upper table (1).

4. The press brake (100) according to claim 3, wherein the display device (30) is configured to be movable in a left/right direction of the upper table (1).

5. The press brake (100) according to any one of the preceding claims, wherein, when two or more abutments (42) are used in the back gauge(40), the superimposed image generation unit (17) is configured to generate, if a distance between two abutments (42) adjacent to each other in a left/right direction is within a predetermined threshold, one enlarged image (172, 174, 175) such that the two abutments (42) are included, and to generate, if the distance between the two abutments (42) adjacent to each other in the left/right direction exceeds the threshold, individual enlarged images (176a, 176b, 177a, 177b, 178a-178c) such that the two abutments (42) are included in the separate enlarged images.

6. A press brake control method comprising:
extracting from a processing program for performing, by an NC device (10) configured to control bending of a workpiece (W), bending of a workpiece (W) to be processed, shape information about the workpiece (W), position information about a position to place the workpiece (W) in each of bending processes of the workpiece (W), abutment identification information identifying an abutment (42) to be used in each of the bending processes, abutment coordinates in real space to position the abutment (42) in each of the bending processes, and abutting area information indicating an area of the abutment (42) to be abutted by the workpiece (W) in each of the bending processes;
**characterized in that**
the press brake control method further comprising:
generating, by the NC device (10), an additional image including a workpiece shape image (Wi) showing a shape of the workpiece (W), a bending line image (V1i) indicating a position of a bending line (V1-V4), and an abutting area image (420i) showing the area of the abutment (42) to be abutted by the workpiece (W), based on the shape information about the workpiece (W), the position information about the workpiece (W), the abutment identification information, the abutment coordinates, and the abutting area information, and coordinate conversion values for converting a position in real space in a direction of a lower table (3) a camera (20) captures an image of to a position on the image captured by the camera (20), the camera (20) being placed on a backside of an upper table (1), and the coordinate conversion values being determined in advance and held in a holding unit (11);
generating, by the NC device (10), a superimposed image obtained by superimposing the additional image on the captured image to generate a superimposed image to be displayed on a display device (30); and
generating parallel images, including a wide-range image (171, 173) based on an angle of view of the camera (20) and an enlarged image (172, 174, 175, 176a, 176b, 177a, 177b, 178a-178c) obtained by enlarging a partial area of the wide-range image (171, 173) and superimposing the workpiece shape image (Wi), the bending line image (V1i), and the abutting area image (420i) thereon, or alternate images, the alternate images being the wide-range image (171, 173) and the enlarged image (172, 174, 175, 176a, 176b, 177a, 177b, 178a-178c) to be alternately switched.

## Patentansprüche

1. Abkantpresse (100), die umfasst:
einen oberen Tisch (1), der mit einem Oberwerkzeug (Tp) zu bestücken ist;
einen unteren Tisch (3), der mit einem Unterwerkzeug (Td) zu bestücken ist;
eine NC-Vorrichtung (10), die so ausgeführt ist, dass sie Biegen eines Werkstücks (W) mittels des Oberwerkzeugs (Tp) und des Unterwerkzeugs (Td) auf Basis eines Bearbeitungsprogramms steuert;
einen Hinteranschlag (40), der an einer Rückseite des unteren Tischs (3) angeordnet ist und einen Anschlag oder mehrere Anschläge (42) umfasst, der/die eine Position in einer Tiefenrichtung zu einem Zeitpunkt des Auflegens des Werkstücks (W) auf das Unterwerkzeug (Td) definiert/definieren;
eine Kamera (20), die an einer Rückseite des oberen Tischs (1) angeordnet und so ausgeführt ist, dass sie ein Bild in einer Richtung des unteren Tischs (3) aufnimmt; sowie
eine Anzeigevorrichtung (30), die so ausgeführt ist, dass sie das mit der Kamera (20) aufgenommene Bild anzeigt,
**dadurch gekennzeichnet, dass**
die NC-Vorrichtung (10) umfasst:
eine Zusatzbild-Erzeugungseinheit (16), die so ausgeführt ist, dass sie auf Basis von Forminformationen über das Werkstück (W), Positionsinformationen über eine Position zum Auflegen des Werkstücks (W) in jedem von Biegeprozessen des Werkstücks (W), Anschlag-Identifikationsinformationen, die einen in jedem der Biegeprozesse zu verwendenden Anschlag (42) identifizieren, Anschlagkoordinaten im realen Raum zum Positionieren des Anschlags (42) in jedem der Biegeprozesse sowie Anschlagbereichsinformationen erzeugt, die einen Bereich des Anschlags (42) angeben, an den das Werkstück (W) in jedem der Biegeprozesse anschlagen soll, extrahiert aus dem Bearbeitungsprogramm, sowie von Koordinaten-Umwandlungswerten zum Umwandeln einer Position in dem realen Raum, von der die Kamera (20) ein Bild aufnimmt, in eine Position auf dem aufgenommenen Bild, ein zu dem aufgenommenen Bild hinzuzufügendes Zusatzbild erzeugt, das ein Bild (Wi) einer Form des Werkstücks, das eine Form des Werkstücks (W) zeigt, ein Bild (V1i) einer Biegelinie, das eine Position einer Biegelinie (V1-V4) angibt, sowie ein Bild (420i) des Anschlagbereiches einschließt, das den Bereich des Anschlags (42) zeigt, an den das Werkstück (W) anschlagen soll; sowie
eine Überlagerungsbild-Erzeugungseinheit (17), die so ausgeführt ist, dass sie ein auf der Anzeigevorrichtung (30) anzuzeigendes Überlagerungsbild erzeugt, indem sie das aufgenommene Bild mit dem Zusatzbild überlagert,
wobei
die Überlagerungsbild-Erzeugungseinheit (17) so ausgeführt ist, dass sie parallele Bilder, die ein Weitwinkelbild (171, 173) auf Basis eines Blickwinkels der Kamera (20) und ein vergrößertes Bild (172, 174, 175, 176a, 176b, 177a, 177b, 178a-178c) einschließen, das gewonnen wird, indem ein Teilbereich des Weitwinkelbildes (171, 173) vergrößert wird und mit dem Bild (Wi) einer Form des Werkstücks, dem Bild (V1i) einer Biegelinie sowie dem Bild (420i) des Anschlagbereiches überlagert wird, oder wechselnde Bilder erzeugt, wobei die wechselnden Bilder das Weitwinkelbild (171, 173) und das vergrößerte Bild (172, 174, 175, 176a, 176b, 177a, 177b, 178a-178c) sind, zwischen denen alternierend gewechselt wird.

2. Abkantpresse (100) nach Anspruch 1, wobei die Kamera (20) ein Fisheye-Objektiv umfasst.

3. Abkantpresse (100) nach Anspruch 1 oder 2, wobei die Anzeigevorrichtung (30) auf eine Oberfläche des oberen Tischs (1) aufgesetzt ist.

4. Abkantpresse (100) nach Anspruch 3, wobei die Anzeigevorrichtung (30) so ausgeführt ist, dass sie in einer Querrichtung des oberen Tischs (1) bewegt werden kann.

5. Abkantpresse (100) nach einem der vorangehenden Ansprüche, wobei die Überlagerungsbild-Erzeugungseinheit (17) so ausgeführt ist, dass sie, wenn zwei oder mehr Anschläge (42) in dem Hinteranschlag (40) eingesetzt werden, und ein Abstand zwischen zwei in einer Querrichtung benachbarten Anschlägen (42) innerhalb einer vorgegebenen Schwelle liegt, ein vergrößertes Bild (172, 174, 175) erzeugt, in dem die zwei Anschläge (42) enthalten sind, und, wenn der Abstand zwischen den zwei in der Querrichtung benachbarten Anschlägen (42) die Schwelle überschreitet, einzelne vergrößerte Bilder (176a, 176b, 177a, 177b, 178a-178c) erzeugt, in denen die zwei Anschläge (42) in den separaten vergrößerten Bildern enthalten sind.

6. Verfahren zum Steuern einer Abkantpresse, das umfasst:
Extrahieren aus einem Bearbeitungsprogramm zum Durchführen von Biegen eines zu bearbeitenden Werkstücks (W) mittels einer NC-Vorrichtung (10), die zum Steuern von Biegen eines Werkstücks (W) ausgeführt ist, von Forminformationen über das Werkstück (W), Positionsinformationen über eine Position zum Auflegen des Werkstücks (W) in jedem von Biegeprozessen des Werkstücks (W), Anschlag-Identifikationsinformationen, die einen in jedem der Biegeprozesse zu verwendenden Anschlag (42) identifizieren, Anschlagkoordinaten im realen Raum zum Positionieren des Anschlags (42) in jedem der Biegeprozesse sowie Anschlagbereichsinformationen, die einen Bereich des Anschlags (42) angeben, an den das Werkstück (W) in jedem der Biegeprozesse anschlagen soll;
**dadurch gekennzeichnet, dass**
das Verfahren zum Steuern einer Abkantpresse des Weiteren umfasst:
Erzeugen eines Zusatzbildes, das ein Bild (Wi) einer Form des Werkstücks, das eine Form des Werkstücks (W) zeigt, ein Bild (V1i) einer Biegelinie, das eine Position einer Biegelinie (V1-V4) angibt, sowie ein Bild (420i) des Anschlagbereiches einschließt, das den Bereich des Anschlags (42) zeigt, an den das Werkstück (W) anschlagen soll, durch die NC-Vorrichtung (10) auf Basis der Forminformationen über das Werkstück (W), der Positionsinformationen über das Werkstück (W), der Anschlag-Identifikationsinformationen, der Anschlagkoordinaten sowie von Koordinaten-Umwandlungswerten zum Umwandeln einer Position im realen Raum in einer Richtung eines unteren Tischs (3), von dem eine Kamera (20) ein Bild aufnimmt, in eine Position des mit der Kamera (20) aufgenommenen Bildes, wobei die Kamera (20) an einer Rückseite eines oberen Tischs (1) positioniert ist und die Koordinaten-Umwandlungswerte im Voraus bestimmt und in einer Speichereinheit (11) gespeichert werden;
Erzeugen eines Überlagerungsbildes durch die NC-Vorrichtung (10), das gewonnen wird, indem das aufgenommene Bild mit dem zusätzlichen Bild überlagert wird, um ein an einer Anzeigevorrichtung (30) anzuzeigendes Überlagerungsbild zu erzeugen; sowie
Erzeugen paralleler Bilder, die ein Weitwinkelbild (171, 173) auf Basis eines Blickwinkels der Kamera (20) und ein vergrößertes Bild (172, 174, 175, 176a, 176b, 177a, 177b, 178a-178c) einschließen, das gewonnen wird, indem ein Teilbereich des Weitwinkelbildes (171, 173) vergrößert wird und mit dem Bild (Wi) einer Form des Werkstücks, dem Bild (V1i) einer Biegelinie sowie dem Bild (420i) des Anschlagbereiches überlagert wird, oder wechselnder Bilder, wobei die wechselnden Bilder das Weitwinkelbild (171, 173) und das vergrößerte Bild (172, 174, 175, 176a, 176b, 177a, 177b, 178a-178c) sind, zwischen denen alternierend gewechselt wird.

## Revendications

1. Frein de presse (100) comprenant:
une table supérieure (1) destinée à recevoir un poinçon (Tp);
une table inférieure (3) destinée à recevoir une matrice (Td);
un dispositif à commande numérique (10) configuré pour commander le pliage d'une pièce d'usinage (W) par le poinçon (Tp) et la matrice (Td) sur la base d'un programme d'usinage;
une butée arrière (40) disposée à l'arrière de la table inférieure (3) et comprenant une ou plusieurs butées (42) définissant une position dans le sens de la profondeur au moment de la mise en place de la pièce d'usinage (W) sur la matrice (Td);
une caméra (20) disposée sur la face arrière de la table supérieure (1) et configurée pour capturer une image dans la direction de la table inférieure (3); et
un dispositif d'affichage (30) configuré pour afficher l'image capturée par la caméra (20),
**caractérisé en ce que**
le dispositif à commande numérique (10) comprend:
une unité de génération d'images supplémentaire (16) configurée pour générer, sur la base d'informations de forme concernant la pièce d'usinage (W), des informations de position concernant une position dans laquelle placer la pièce d'usinage (W) lors de chacun des processus de pliage de la pièce d'usinage (W), des informations d'identification de butée identifiant une butée (42) à utiliser lors de chacun des processus de pliage, des coordonnées de la butée dans l'espace réel pour positionner la butée (42) lors de chacune des opérations de pliage, et des informations sur la zone de butée indiquant une zone de la butée (42) contre laquelle la pièce d'usinage (W) doit venir buter lors de chacune des opérations de pliage, extraites du programme de traitement, ainsi que des valeurs de conversion de coordonnées permettant de convertir une position dans l'espace réel dont la caméra (20) capture une image en une position sur l'image capturée, une image supplémentaire à ajouter à l'image capturée, comprenant une image de la forme de la pièce d'usinage (Wi) montrant la forme de la pièce d'usinage (W), une image de ligne de pliage (V1i) indiquant la position d'une ligne de pliage (V1-V4), et une image de la zone de butée (420i) montrant la zone de la butée (42) contre laquelle la pièce d'usinage (W) doit venir buter; et
une unité de génération d'images superposées (17) configurée pour générer une image superposée destinée à être affichée sur le dispositif d'affichage (30) en superposant l'image supplémentaire sur l'image capturée, dans laquelle
l'unité de génération d'images superposées (17) est configurée pour générer des images parallèles, comprenant une image à grand champ (171, 173) en fonction de l'angle de vue de la caméra (20) et une image agrandie (172, 174, 175, 176a, 176b, 177a, 177b, 178a-178c) obtenues en agrandissant une zone partielle de l'image à grand champ (171, 173) et en y superposant l'image de la forme de la pièce d'usinage (Wi), l'image de la ligne de pliage (V1i) et l'image de la zone de jonction (420i) sur celle-ci, ou des images en alternance, les images en alternance étant l'image à large champ (171, 173) et l'image agrandie (172, 174, 175, 176a, 176b, 177a, 177b, 178a-178c) devant être commutées en alternance.

2. Frein de presse (100) selon la revendication 1, dans laquelle la caméra (20) comprend un objectif hypergone.

3. Frein de presse (100) selon les revendications 1 ou 2, dans laquelle le dispositif d'affichage (30) est monté sur une surface de la table supérieure (1).

4. Frein de presse (100) selon la revendication 3, dans laquelle le dispositif d'affichage (30) est configuré pour être mobile dans une direction gauche/droite de la table supérieure (1).

5. Frein de presse (100) selon l'une quelconque des revendications précédentes, dans laquelle, lorsque deux butées (42) ou plus sont utilisées dans la butée arrière (40), l'unité de génération d'images superposées (17) est configurée pour générer, si une distance entre deux butées (42) adjacentes l'une à l'autre dans une direction gauche/droite est comprise dans une fourchette prédéterminée, une image agrandie (172, 174, 175) de telle sorte que les deux butées (42) y soient incluses, et à générer, si la distance entre les deux butées (42) adjacentes l'une à l'autre dans la direction gauche/droite dépasse le seuil, des images agrandies individuelles (176a, 176b, 177a, 177b, 178a-178c) de telle sorte que les deux butées (42) soient incluses dans les images agrandies distinctes.

6. Procédé de commande d'un frein de presse comprenant:
l'extraction, à partir d'un programme de traitement destiné à exécuter, par un dispositif à commande numérique (10) configuré pour commander le pliage d'une pièce d'usinage (W), le pliage d'une pièce d'usinage (W) à traiter, d'informations de forme concernant la pièce d'usinage (W), d'informations de position concernant une position dans laquelle placer la pièce d'usinage (W) lors de chacun des processus de pliage de la pièce d'usinage (W), des informations d'identification de butée identifiant une butée (42) à utiliser dans chacune des opérations de pliage, des coordonnées de butée dans l'espace réel pour positionner la butée (42) dans chacune des opérations de pliage, et des informations de zone de butée indiquant une zone de la butée (42) contre laquelle la pièce à usiner (W) doit venir buter dans chacune des opérations de pliage;
**caractérisé en ce que**
le procédé de commande du frein de presse comprend en outre:
la génération, par le dispositif à commande numérique (10), d'une image supplémentaire comprenant une image de la forme de la pièce d'usinage (Wi) montrant la forme de la pièce d'usinage (W), une image de ligne de pliage (V1i) indiquant la position d'une ligne de pliage (V1-V4), et une image de la zone de butée (420i) représentant la zone de la butée (42) contre laquelle la pièce à usiner (W) doit venir buter, sur la base des informations de forme concernant la pièce à usiner (W), des informations de position concernant la pièce à usiner (W), les informations d'identification de la butée, les coordonnées de la butée et les informations relatives à la zone de butée, ainsi que des valeurs de conversion de coordonnées permettant de convertir une position dans l'espace réel, dans la direction d'une table inférieure (3) dont une caméra (20) capture une image, en une position sur l'image capturée par la caméra (20), la caméra (20) étant placée à l'arrière d'une table supérieure (1), et les valeurs de conversion de coordonnées étant déterminées à l'avance et conservées dans une unité de stockage (11);
la génération, à l'aide du dispositif à commande numérique (10), d'une image superposée obtenue en superposant l'image supplémentaire sur l'image capturée afin de générer une image superposée destinée à être affichée sur un dispositif d'affichage (30); et
la génération d'images parallèles, comprenant une image à grand champ (171, 173) en fonction de l'angle de vue de la caméra (20) et une image agrandie (172, 174, 175, 176a, 176b, 177a, 177b, 178a à 178c) obtenues en agrandissant une zone partielle de l'image à grand champ (171, 173) et en y superposant l'image de la forme de la pièce d'usinage (Wi), l'image de la ligne de pliage (V1 i) et l'image de la zone de jonction (420i) sur celle-ci, ou des images en alternance, les images en alternance étant l'image à large champ (171, 173) et l'image agrandie (172, 174, 175, 176a, 176b, 177a, 177b, 178a-178c) devant être commutées en alternance.
